# EUROPEAN PATENT APPLICATION

(11) **EP 2 666 998 A1**
(43) Date of publication of application: **27.11.2013**
(21) Application number: 12169558.9
(22) Date of filing: 25.05.2012
(51) Int. Cl.: F02D 41/00, F02M 25/08, B60K 15/035

(54) **Method and system for quickly detecting an absence of a leak in a fuel system**

(71) Applicant: Inergy Automotive Systems Research (Société Anonyme), 1120 Bruxelles (BE)
(72) Inventor: Hill, David, Oakland, MI 48382 (US); Criel, Bjorn, 1750 Sint-Martens-Lennik (BE); Chaussinand, Antoine, 1020 Bruxelles (BE)
(74) Representative: Descazeaux, Charles

(57) **Abstract**

It is proposed a method for detecting rapidly an absence of a leak in a fuel system mounted on board of a vehicle, the fuel system comprising a pressure sensor adapted to measure pressure comprised within a predetermined working range of pressure. The method is such that it comprises the steps of:
a) measuring (S3), by means of the pressure sensor, a pressure in the fuel system at a predetermined time;
b) detecting (S4) an absence of a leak when the value of the measured pressure lies outside a range of pressure values which upper and lower limits are set as a function of a predetermined noise and the predetermined working range of pressure.

## Description

The present invention relates generally to evaporative emission control systems that are used in automotive vehicles to control the emission of volatile fuel vapors. In particular, the invention relates to an on-board diagnostic method for detecting an absence of a leak in a fuel system mounted on board of a vehicle.

Applicable regulations require the monitoring of the vehicle's evaporative emission system to ensure integrity of the fuel system. This requirement specifies, among other things, checking for the absence of leaks in the system (i.e. checking that there is no breach in the fuel system).

Most prior art techniques for detecting an absence of leak in a fuel system utilize measurements of pressure internal to the fuel system. The prior art detection techniques, however, are particularly time and resource consuming. For example, in a known detection technique it is proposed to apply a vacuum to the inner volume of the entire fuel system. Once a vacuum is created, the system is closed and it is checked for a leak by observing the rate at which the vacuum decays. This known technique requires measurement and processing to be made over a relatively long period of time, since the rate at which the vacuum decays has to be analyzed. Additionally, the cost of this known technique is relatively high since means for generating and adding vacuum into the fuel system are to be implemented. In a conventional internal combustion vehicle, vacuum from the engine intake manifold can be used to decrease the time and cost for this test, however in the scope of a vehicle capable of a substantial electrical drive only range (plug-in hybrid), this engine vacuum can not be relied on. This leads to a disadvantage in a plug in hybrid vehicle, but also to a disadvantage to vehicle platforms containing both conventional internal combustion powertrains, and plug-in hybrid powertrains. The disadvantage is the need for two separate leak detection methodologies to avoid component overcosts. The result is a substantial increase in development time and calibration for the vehicle platform.

What is needed is an improved method for detecting an absence of a leak in a fuel system for a vehicle that is reliable, faster, simpler, and hence more cost-effective, than prior art techniques.

An object of the present invention is to propose a method for detecting rapidly an absence of a leak in a fuel system mounted on board of a vehicle, the fuel system comprising a pressure sensor adapted to measure pressure comprised within a predetermined working range of pressure. The method is such that it comprises the steps of:
a) measuring, by means of the pressure sensor, a pressure in the fuel system at a predetermined time;
b) detecting an absence of a leak when the value of the measured pressure lies outside a range of pressure values which upper and lower limits are set as a function of a predetermined noise and the predetermined working range of pressure.

Thus, the present invention relates to a quick no leak test based on the analysis of only one measurement of pressure obtained at a predetermined time. The idea behind the present invention is to determine the integrity (i.e. absence of leak) of the fuel system by detecting the effective presence of a pressure (positive or negative pressure) within the fuel system. The present invention proposes to detect the effective presence of a pressure inside the fuel system by comparing the value of the pressure measured by the pressure sensor with two predetermined threshold values, also called upper and lower limits. These upper and lower limits are set as a function of the degradation introduced by a predetermined noise into the measurement of the pressure sensor. In fact, these upper and lower limits represent a tolerance range (range of pressure values) within the working range of pressure of the pressure sensor. In fact, this tolerance range represents the uncertainty of measurement of the pressure sensor with respect to the zero value (i.e. 0 pressure). Advantageously, the degradation introduced by the predetermined noise is known beforehand. This degradation is, for example, obtained from theoretical and/or experimental analysis, or from the literature (specification, etc.).

In a particular embodiment of the invention, the upper and lower limits of the tolerance range are set as a function of the measurement accuracy (i.e. error of precision) of the pressure sensor.

In another particular embodiment of the invention, it is proposed to take into account the electronic noise of the vehicle for the adjustment of the upper and lower limits of the tolerance range.

In yet another particular embodiment of the invention, the noise introduced by the measurement acquisition chain (comprising means for controlling the pressure sensor, means for processing data provided by the pressure sensor,...) is taking into account for the adjustment of the upper and lower limits. In others words, the resolution of the complete data acquisition chain of the pressure measurement is taking into account for the adjustment of the upper and lower limits.

If the value of the measured pressure lies outside the tolerance range, i.e. if the value of the measured pressure is greater than the upper limit or less than the lower limit, it is detected with certainty the presence of pressure in the fuel system, and it is concluded that there is an absence of leak.

On the other hand, if the value of the measured pressure lies inside the tolerance range, it is not possible to conclude with certainty whether or not there is an absence of leak. In this case, further processing steps may be carried out to detect with certainty the presence or absence of a leak in the fuel system.

In an advantageous embodiment, the pressure sensor is configured to measure the pressure inside the fuel system at each of the vehicle start-ups. In this way, information about an absence of a leak in the fuel system may be obtained at a very short time after each of the vehicle start-ups. The method of the present invention then complies with the provisions of applicable regulations and allows for a high ratio of drive cycles in which a leak will be checked for. The system is independent of engine operation for generation of rapid vacuum, and also independent of the time required to induce positive or negative pressure via an auxiliary pump for example.

Preferably, the method of the present invention is provided for detecting an absence of a leak in a vehicle with a fuel system that is sealed to a pressure level above the limits of the predetermined noise and the predetermined working range of the pressure as described above. The method of the present invention is independent of the operation of the internal combustion engine.

In a particular embodiment, the vehicle can be a plug-in hybrid vehicle.

Another embodiment of the present invention further relates to a fuel system comprising a fuel tank, a pressure sensor and a processor. The pressure sensor is arranged to measure pressure inside the fuel tank and is operatively connected to the processor. The processor is configured such that it can carry out the method for detecting an absence of a leak as described above.

Another embodiment of the present invention further relates to a motor vehicle comprising a fuel system as described above.

In another embodiment, the invention further relates to a computer-readable storage means storing a computer program for use in a fuel system as described above and containing a set of instructions executable by a computer for implementing the method for detecting an absence of a leak as described above (in any one of its different embodiments).

These and other aspects and advantages of embodiments of the invention will be further clarified with respect to the accompanying figures, given by way of an indicative and non-restrictive example, and in which:

Figure 1 illustrates a fuel system according to one embodiment of the invention; and

Figure 2 presents a particular embodiment of an algorithm for detecting an absence of a leak in the fuel system of figure 1.

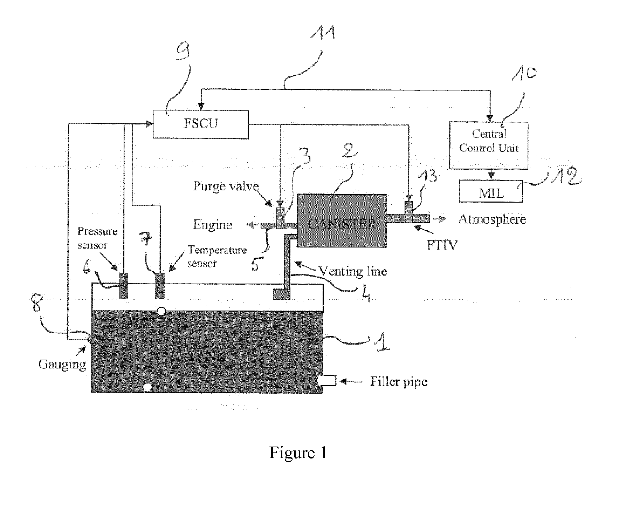

Figure 1 illustrates a fuel system according to a particular embodiment of the invention. The fuel system comprises a fuel tank 1 that is in fluid communication with a charcoal canister 2 via fluid line 4 (also called venting line). The charcoal canister 2 has another fluid line 5 connected to the intake manifold 3 of the internal combustion engine. A valve 3 (also called purge valve) is disposed in the fluid line 5 to allow for selective communication between the charcoal canister 2 and the intake manifold (not shown). There is an additional communication between the charcoal canister 2 and the atmosphere. This communication can be selectively controlled via a valve 13 (also called fuel tank isolation valve or FTIV) to create a completely sealed fuel system.

An additional valve (not pictured) could be disposed in the fluid line 4 for isolating the tank 1 from the canister 2 to avoid unwanted fuel vapour succion inside the air intake manifold during the canister purge mode. In this case the valve (not pictured) would ideally be open during the test, in order to test the complete system.

The fuel system further comprises a pressure sensor 6 adapted for measuring the pressure inside the fuel tank 1. For example, the pressure sensor 6 is adapted to measure pressure comprised within a predetermined working range of pressure. For example this could be a range of -30mbar to +30mbar for the fuel system in a conventional internal combustion vehicle or -150mbar to +350mbar in a plug-in hybrid vehicle.

The fuel system further comprises a temperature sensor 7 adapted for measuring the temperature inside the fuel tank 1. The fuel system further comprises a float-type fuel level sensor 8 adapted for measuring the fuel level inside the fuel tank 1. The sensors are used in this invention for diagnostic purposes.

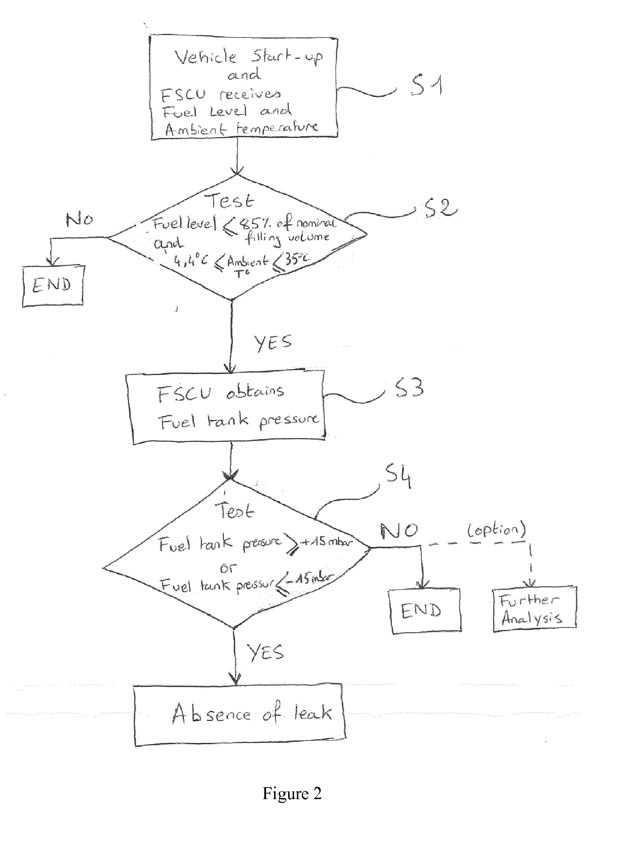

Advantageously, when the vehicle starts (i.e. engine is started), a Fuel System Control Unit (FSCU) 9 receives the value of a pressure measured by the pressure sensor 6. The FSCU is configured to execute an algorithm (described hereafter in relation with figure 2) for detecting an absence of a leak in the fuel system of figure 1. The FSCU communicates with a Central Control Unit 10 (i.e. an engine control unit (ECU)) via of a communication bus 11. The Central Control Unit is in charge of activating a Malfunction Indicator Light 12 (MIL) on the dashboard of the vehicle when operation problem is detected.

In another embodiment the algorithm for detecting an absence of a leak in the fuel system can be executed by the Central Control Unit, or another existing Control Unit (i.e. microprocessor) on the vehicle.

Figure 2 shows a flow chart which illustrates the algorithm (on-board diagnostic) executed by the FSCU 9 for detecting an absence of a leak in the fuel system of figure 1.

At step S 1, the vehicle starts and the FSCU 9 receives a set of information containing the fuel level in the tank measured by the fuel level sensor 8 and the ambient temperature measured by a temperature sensor mounted on-board the vehicle.

At step S2, the FSCU 9 performs a test which consists in:
- determining whether the fuel level in the tank is lower than a predetermined threshold level. For example, this threshold level can be set such that it corresponds to 85% of the nominal filling volume of the tank; and
- determining whether the ambient temperature lies inside a predetermined range of temperature. For example, this predetermined range of temperature has an upper limit set at 35°C and a lower limit set as 4,4°C.

If the answer to test S2 is "yes"; i.e. if the fuel level in the tank is, for example, lower than or equal to a level corresponding to 85% of the nominal filling volume of the tank, and if the ambient temperature is, for example, lower than or equal to 35°C and greater than or equal to 4,4°C; the FSCU 9 reads (at step S3) the fuel tank pressure measured by the pressure sensor 6, and then executes step S4 (described hereafter).

On the other hand, if the answer to test S2 is "no"; i.e. if the fuel level in the tank is, for example, greater than a level corresponding to 85% of the nominal filling volume of the tank, or if the ambient temperature is, for example, greater than 35°C or lower than 4,4°C; it is concluded that conditions are not suitable for a no leak check and the algorithm is stopped until the next occasion of a vehicle start-up.

At step S4, the FSCU 9 performs a simple and quick test which consists in determining whether the value of the pressure measured inside the fuel tank lies outside a range of pressure values which upper and lower limits are set as a function of a predetermined noise. In a particular embodiment, the upper and lower limits are set as a function of the measurement accuracy of the pressure sensor 6. In another embodiment, the upper and lower limits are further set as a function of the electronic noise of the vehicle. For example, the pressure sensor 6 is adapted to measure pressure comprised within the working range -150mbar to +350mbar. Considering, the measurement accuracy of the pressure sensor 6, for example 1 % of the working range, and the electronic noise of the vehicle, the upper and lower limits are set at +15mbar and -15mbar, respectively. In a fuel system with a working range of between -30mbar and +30mbar, the limits could be set at a lower value, for example the upper and lower limits could be set at +5mbar and -5mbar.

If the answer to test S4 is "yes"; i.e. if the value of the pressure measured inside the fuel tank is, for example, greater than or equal to +15mbar or lower than or equal to -15mbar, it is concluded that there is no leak (i.e. the fuel system is sealed). Thus, the method according to the invention permits a quick detection of an absence of a leak in the fuel system, since only one measurement of pressure is analyzed with respect to two thresholds.

On the other hand, if the answer to test S4 is "no"; i.e. if the value of the pressure measured inside the fuel tank is, for example, lower than +15mbar and greater than -15mbar, it is not possible to conclude with certainty whether there is an absence of leak. In this case, the algorithm may stop.

In an advantageous embodiment, if the answer to test S4 is "no", the FSCU 9 may perform further analysis steps for determining the integrity (absence of leak) of the fuel system. In a preferred embodiment, these further steps may consist in:
- measuring a first pressure P1 and a first temperature T1 in the fuel system at a first time;
- measuring a second pressure P2 and a second temperature T2 in the fuel system at a second later time;
- calculating a function of the measured variables (P1, T1, P2, T2) and comparing this function to a predetermined value.

In an exemplary way, the predetermined value may be a ratio of two pressure-temperature ratios, determined before and after adding "energy" (heat or pressure) to the fuel system, respectively. If the value of this "ratio of ratios" is outside a predetermined range, the existence of a fuel leak may be declared.

Advantageously, "energy" is added to the fuel system by using means already present on board the vehicle for other purposes (for example, the fuel pump).

Although the invention has been disclosed by means of a limited number of embodiments, this was done to illustrate the invention, and not to limit its scope. The skilled person will recognize from the previous detailed description and from the figures, modifications and changes can be made to the preferred embodiments of the invention without departing from the scope of this invention defined in the following claims.

## Claims

1. Method for detecting an absence of a leak in a fuel system mounted on board of a vehicle, the fuel system comprising a pressure sensor (6) adapted to measure pressure comprised within a predetermined working range of pressure, the method comprising the steps of:
a) measuring (S3), by means of the pressure sensor, a pressure in the fuel system at a predetermined time;
b) detecting (S4) an absence of a leak when the value of the measured pressure lies outside a range of pressure values which upper and lower limits are set as a function of a predetermined noise and the predetermined working range of pressure.

2. Method according to claim 1, wherein said predetermined noise is caused by the measurement accuracy of said pressure sensor.

3. Method according to any of claims 1 to 2, wherein said predetermined noise is caused by the electronic noise of the vehicle.

4. Method according to any of claims 1 to 3, wherein the predetermined time is at an occasion of vehicle start-up.

5. Method according to any of claims 1 to 4, wherein the vehicle is a (plug-in) hybrid vehicle comprising an electrical engine.

6. Fuel system comprising a fuel tank (1), a pressure sensor (6) and a processor (9);
said pressure sensor being arranged to measure pressure inside said fuel tank and being operatively connected to said processor;
wherein said processor is configured to carry out the method according to any of claims 1 to 5.

7. The fuel system according to claim 6, further comprising an ECU, said processor being comprised in said ECU.

8. A motor vehicle comprising a fuel system according to claim 6 or claim 7.

9. A computer program for use in a fuel system according to claim 6 or claim 7, configured to carry out, when executed, the method according to any of claims 1 to 5.
